# EUROPÄISCHE PATENTSCHRIFT

(11) **EP 3 445 618 B1**
(45) Veröffentlichungstag und Bekanntmachung des Hinweises auf die Patenterteilung: **19.02.2020**
(21) Anmeldenummer: 17715684.1
(22) Anmeldetag: 04.04.2017
(51) Int. Cl.: B60R 22/18

(54) **ÜBERZUG FÜR EIN BAND**
COVER FOR A STRAP
ÉLÉMENT DE RECOUVREMENT POUR UNE COURROIE

(30) Priorität: 19.04.2016 DE 102016206589
(43) Veröffentlichungstag der Anmeldung: 27.02.2019
(73) Patentinhaber: Volkswagen Aktiengesellschaft, 38440 Wolfsburg (DE)
(72) Erfinder: KLUBACH, Julian, 38440 Wolfsburg (DE)
(86) Internationale Anmeldenummer: PCT/EP2017/057912
(87) Internationale Veröffentlichungsnummer: WO 2017/182259

(56) Entgegenhaltungen:
- DE-A1-102005 035 867
- DE-U1- 20 200 271
- FR-A1- 3 013 651

## Beschreibung

Die Erfindung betrifft einen Überzug für ein Band eines Sicherheitsgurtes für ein Fahrzeug, insbesondere zum Schutz des Bandes vor mechanischen Einflüssen. Hierbei weist der Überzug einen Grundkörper auf, welcher so ausgeprägt ist, dass dieser Grundkörper eine zumindest abschnittsweise von einer Wandung umgrenzte Durchbrechung aufweist. Hierdurch ist der Überzug so an dem Band anordenbar, dass die Wandung des Grundkörpers das Band in Umfangsrichtung des Grundkörpers zumindest abschnittsweise umschließt, wobei an der Wandung des Grundkörpers ein Halter angeordnet ist und der Halter zumindest eine Aufnahme aufweist.

In Kraftfahrzeugen aller Art sind Sicherheitssysteme, wie beispielsweise Airbag- und Gurtstraffersysteme vorhanden. Viele dieser Kraftfahrzeuge sind zudem mit Komfortsystemen ausgestattet, welche in Verbindung mit den Sicherheitssystemen agieren. Unter anderem sind dabei Systeme zur Erkennung der Sitzbelegung von Insassensitzen oder des Gurtschlosszustandes vorgesehen. Diese Systeme stellen dabei zum einen ein Signal zur Verfügung, ob eine Person auf einem Sitz positioniert ist, und zum anderen ein Signal, ob ein Sicherheitsgurt im Gurtschloss arretiert wurde.

Bezüglich der Verwendung einer Sitzbelegungserkennung beschreibt z. B. die DE 44 20 114 A1 ein Airbagsystem, welches die Fahrzeuginsassen bei einem Frontal- sowie Seitenaufprall schützen soll. Dieses Airbagsystem ist mit mehreren Airbags ausgestattet, wobei diese in Abhängigkeit der Richtung und Intensität eines Aufpralles, welche mittels Beschleunigungssensoren bestimmt werden, sowie der Belegung eines Sitzes mit einem Fahrzeuginsassen gezielt ausgelöst werden.

Im Bereich der Zustandserkennung von Gurtschlössern werden, wie die DE 196 24 199 C1 in der Darstellung des Standes der Technik beschreibt, unter anderem mikromechanische Gurtkontaktschalter oder auch Hall-Sensoren zur Detektion der Gurtschlossverriegelung verwendet, wobei Systeme auf Basis von Hall-Sensoren kontaktlos und somit verschleißärmer und zuverlässiger gegenüber den mechanischen Schaltern sind.

In beiden Fällen werden jedoch Signal- und Energieleitungen in Form zumindest eines Kabels benötigt, um einerseits eine solche Gurtschlosszustandserkennung mittels Energie zu versorgen und andererseits die Zustandssignale beispielsweise einem Steuergerät zuzuführen. Um dies zu realisieren, ist es notwendig ein solches Kabel aus dem Bereich des Gurtschlosses nach außen zu führen.

Zu dieser Thematik zeigen die DE 20 2006 004 007 U1 und die DE 10 2008 052 332 A1 eine auf einer Achse angeordnete Feder. Diese Feder ist hierbei abschnittsweise so ausgebildet, dass sie zur Führung bzw. zur Zugentlastung eines Kabels, welches zur elektrischen Anbindung des Gurtschlosses vorgesehen ist, dient. Das Kabel wird dabei durch den mit dem Gurtschloss verbundenen und der Befestigung des Gurtschlosses an der Karosserie dienenden Befestigungsfuß geführt, wobei das Ende dieses Kabels in einen Stecker mündet.

Neben der Möglichkeit, das Kabel durch den Befestigungsfuß zu verlegen, existieren Lösungen, dieses Kabel nach dem Austritt aus beispielsweise dem Gurtschloss außerhalb des Befestigungsfußes anzuordnen. Eine solche Lösung wird ferner dann eingesetzt, wenn das Gurtschloss über ein Gurtband an dem Befestigungsfuß und nicht direkt an diesem angebracht ist. Das Verlegen des Kabels erfolgt hierbei zumeist unterhalb eines Gurtbandschutzes, welcher primär dem Schutz des Gurtbandes vor mechanischen Einwirkungen dient sowie mechanisch stabilisierend auf das flexible Gurtband einwirkt, was sich beispielsweise auch bei der Montage des Gurtschlosses respektive des Gurtbandes im Kraftfahrzeug vorteilhaft auswirkt.

Der an einem Kabel angebrachte Stecker wird in der Regel mittels eines Steckerhalters an einem solchen Befestigungsfuß fixiert, wobei ein Blechteil des Befestigungsfußes dabei normal zum Karosserieboden verbogen wird, sodass eine Nase entsteht. An dieser Nase wird ein solcher Steckhalter aufgeschoben und an diesem Steckerhalter wiederum der mit dem Kabel verbundene Stecker befestigt. Nachteilig an der vorstehend beschriebenen Vorgehensweise ist unter anderem die Notwendigkeit eines zusätzlichen Steckerhalters zur Befestigung des Steckers sowie ein hoher Verschnitt zur Herstellung der Nase in dem Befestigungsfuß. Der hohe Verschnitt bedingt sich hierbei durch die Unerlässlichkeit, das in der Regel aus einem mit einer Blechdicke von über 3 Millimeter bestehende Material zur Formung der Nase zu verjüngen, was gemäß des Standes der Technik mittels eines Zuschnittes des Materials erfolgt.

Zudem beschreiben die DE 10 2005 035 867 A1 sowie die DE 202 0 271 U1 jeweils ein Gurtschlossstützelement, welches an einem Gurtband angeordnet und mit einem Halter versehen ist, wobei der jeweilige Halter der Halterung eines Gurtschlosses in gerader oder abgewinkelter Stellung dient.

Der FR 3 013 651 A1 ist überdies eine Gurtschlosshülle mit einem Halter zu entnehmen, wobei die Halter ebenfalls dazu gedacht sind, die Gurtschlösser über die Gurtschlosshülle zu haltern.

Vor diesem Hintergrund liegt der Erfindung die Aufgabe zugrunde, einen Überzug der eingangs genannten Art derart auszuführen, dass keine zusätzlichen Bauteile zur Befestigung eines Elementes an einem Montagesockel benötigt werden und ein Verschnitt an dem Montagesockel vermieden wird.

Diese Aufgabe wird gelöst mit einem Überzug gemäß den Merkmalen des Patentanspruches 1. Die Unteransprüche betreffen besonders zweckmäßige Weiterbildungen der Erfindung.

Erfindungsgemäß ist also ein Überzug für ein Band eines Sicherheitsgurtes für ein Fahrzeug vorgesehen, welches insbesondere dem Schutz des Bandes vor mechanischen Einflüssen dient. Dabei weist der Überzug einen Grundkörper auf, welcher so ausgeprägt ist, dass dieser Grundkörper eine zumindest abschnittsweise von einer Wandung umgrenzte Durchbrechung aufweist. Hierdurch ist der Überzug so an dem Band anordenbar, dass die Wandung des Grundkörpers das Band in Umfangsrichtung des Grundkörpers zumindest abschnittsweise umschließt. Erfindungsgemäß ist zudem an der Wandung des Grundkörpers ein Halter angeordnet.

Das Band kann hierbei unter anderem als Gurtband ausgebildet sein und z. B. der Verbindung eines Gurtschlosses einer Sicherheitsgurtanordnung mit einem Montagesockel, welcher an einer Fahrzeugkarosserie form- und/oder kraftschlüssig oder stoffschlüssig befestigt ist, dienen.

Aufgrund der Anordnung des Halters ist es im Bereich des Möglichen, ein beliebiges Element an diesem Halter anzubringen und somit vor allem fertigungstechnische Veränderungen an dem Montagesockel zur Befestigung des Gurtschlosses der Sicherheitsgurtanordnung an der Fahrzeugkarosserie weitgehend zu vermeiden und der Verwendung zusätzlich notwendiger Bauteile zur Befestigung eines solchen Elementes vorzubeugen.

Ein solches Element kann unter anderem als ein Stecker ausgebildet sein.

Der Grundkörper an sich muss hierbei nicht aus einer geschlossen umlaufenden Wandung bestehen. Vielmehr kann dieser als eine mehrere Seitenteile ergebende Abwicklung ausgeführt sein, welche über ein Befestigungselement verbunden den Grundkörper ergeben.

In einer besonders vorteilhaften Weiterbildung der Erfindung weist der Halter eine zumindest annähernd quaderförmige, plattenartig ausgeprägte Grundform auf, wobei die Dicke des Halters normal zu einer Halterebene ausgeprägt ist. Eine solch ausgeprägte Grundform kann eine einfache Fertigung des Halters ermöglichen und bietet ferner eine Vielzahl an Befestigungsmöglichkeiten, um unter anderem ein Element wie einen Stecker an diesem Halter anzubringen.

Als überaus praxisgerecht erweist es sich, wenn dem annähernd quaderförmig und plattenartig ausgeprägten Halter eine länglich gestreckte Form eigen ist und dieser somit eine Längsrichtung aufweist. Aufgrund der länglich gestreckten Form des Halters kann dieser in eine Raumrichtung eine höhere Ausdehnung aufweisen als in die zwei verbliebenen Raumrichtungen eines dreidimensionalen Raumes, d. h. eine der drei Kantenlängen des quaderförmig ausgeprägten Halters ist deutlich größer als die zwei weiteren dieser Kantenlängen.

Beispielsweise könnte die Ausdehnung bzw. Kantenlänge in eine der Raumrichtungen zumindest doppelt so hoch sein wie die nächstgrößte Ausdehnung bzw. Kantenlänge in eine der weiteren Raumrichtungen.

Eine solch langestreckte Form kann vor allem in der Positionierung von an dem Halter zu befestigenden Elementen, wie z. B. einem oder mehreren Steckern, in dem Sinne von Vorteil sein, dass mehrere solcher Elemente in einfacher Weise in Längsrichtung des Halters nebeneinander angeordnet werden könnten.

Ist der Halter so an dem Grundkörper des Überzuges angeordnet, dass die Längsrichtung des Halters orthogonal zu einer Mittelachse des Überzuges ausgerichtet ist, so ist dies als äußerst gewinnbringend anzusehen, da somit eine kompakte Bauform des Überzuges bei gleichzeitig hoher Positionsvariabilität eines an dem Halter des Überzuges anzubringenden Elementes wie einem oder mehreren Steckern, ermöglicht wird.

In einer zudem vorteilhaften Ausführungsform der Erfindung weist der Halter in seiner Längsrichtung, beidseitig der Mittelachse des Überzuges, gegenüber dem Grundkörper einen Überstand auf. Der Halter kann hierdurch nicht bis zu den Außenmaßen des Grundkörpers begrenzt sein und über diesen Grundkörper herausragen. Auf dieser Basis kann in Längsrichtung bei Bedarf ausreichend Platz an dem Halter für die Anordnung mehrerer Elemente, beispielsweise Stecker, geschaffen werden.

Weist der Halter zumindest eine Aufnahme auf, so kann unter anderem gewährleistet werden, dass beispielsweise ein an dem Halter anzubringendes Element oder anzubringende Elemente wie z. B. ein oder mehrere Stecker auf einfache Art und Weise an dem Halter befestigbar sind.

In diesem Zusammenhang zeigt es sich als äußerst erfolgversprechend, wenn die zumindest eine Aufnahme den Halter normal zu der Halterebene durchbricht. Somit wäre die Aufnahme in Form einer einfachen Durchbrechung ausgeprägt, wodurch z. B. eine simple Fertigung der Aufnahme sichergestellt werden könnte. Es bestünde dabei die Möglichkeit, mehrere solcher Aufnahmen in den Halter einzubringen, wodurch sich ebenso mehrere Elemente wie Stecker an dem Halter anbringen ließen.

In einer weiteren überaus vielversprechenden Ausführungsform der Erfindung weist der Halter zwei Aufnahmen auf, wobei jeweils eine Aufnahme auf einer Seite der Mittelachse des Überzuges im Bereich des Überstandes des Halters angeordnet ist. In einer solchen Weise in den Halter eingebrachte Aufnahmen bieten den Vorteil, dass sie durch die symmetrisch beabstandete Anordnung der Aufnahmen einfach zugänglich sind und ein eventuell auftretender Raummangel bei einer Montage von Elementen, wie z. B. Steckern, in den Aufnahmen weitestgehend minimiert wird.

Unterscheidet sich zudem der Flächeninhalt der Grundflächen zumindest zweier in den Halter eingebrachter Aufnahmen voneinander, so zeigt sich dies als vorteilhaft. Die Aufnahmen können somit in verschiedener Größe ausgeprägt sein.

Hierbei könnte z. B. der Flächeninhalt der Grundfläche einer in den Halter eingebrachten Aufnahme kleiner sein als der Flächeninhalt einer zweiten in den Halter eingebrachten Aufnahme.

Sind die Aufnahmen ferner als Durchbrechung ausgeprägt, können sich dabei bei dem Vorhandensein zumindest zweier Aufnahmen die Öffnungen dieser Aufnahmen größentechnisch unterscheiden.

Auf Basis solch verschieden großer Aufnahmen können in diesen Aufnahmen gewinnbringend verschieden große Elemente, beispielsweise Stecker, angeordnet werden.

Als besonders vorteilhaft ist weiterhin eine Ausbildung der Erfindung anzusehen, bei welcher an der zumindest einen Aufnahme des Halters eine Führung angeordnet ist, welche den Halter in eine Richtung, welche innerhalb der Halterebene liegt, abschnittsweise durchbricht, wodurch die Aufnahme in diese Richtung zugänglich ist. An einer Aufnahme kann somit eine Führung angeordnet sein, welche die zunächst vom Halter in der Halterebene umschlossene Aufnahme in einer Richtung innerhalb dieser Halterebene nach außen öffnet. Hierdurch lassen sich z. B. mit einer Führung korrespondierend ausgeprägte Elemente, wie Stecker, über die Führung des Halters in die Aufnahme einbringen.

Eine Breite der Führung kann hierbei geringer sein als eine Breite der Aufnahme.

Überdies stellt es sich als sehr zweckmäßig dar, wenn sich eine lichte Weite der Führung in Richtung der Aufnahme verringert, wodurch die Führung sich in diese Richtung zuspitzend verläuft. Die Führung stellt somit eine Art in Richtung der Aufnahme V-förmig verlaufende Öffnung dar. Aufgrund dieser Ausgestaltung in Verbindung mit der Ausgestaltung der Aufnahme könnten sich in dem Halter im Bereich der Aufnahme beidseitig der Führung gewissermaßen zwei Arme ausbilden. Diese Arme könnten bei einem Einschieben eines aufzunehmenden Elementes, beispielsweise eines Steckers, in Richtung oder entgegengerichtet der Aufnahme eine Biegung vollziehen und auf Basis der V-förmigen Ausgestaltung der Führung sozusagen einen Widerhaken bilden, welcher ein in die Aufnahme eingebrachtes Element in seiner Endposition in der Aufnahme vorteilhaft fixiert.

Eine besonders vorteilhafte Weiterbildung liegt weiterhin darin, dass der Halter an einer Stirnseite des Grundkörpers angeordnet ist. Der Halter könnte dabei mit der Seite seiner geringsten Ausdehnung Stoß an Stoß an der Wandung des Grundkörpers angeordnet sein.

Auf diese Weise ließe sich der Überzug fertigungstechnisch sehr vorteilhaft in einer zunächst flachen Bauweise herstellen, wobei z. B. der Grundkörper einstweilen als eine mehrere Seitenteile ergebende Abwicklung realisiert wäre, welche anschließend zum Grundkörper geformt und mittels eines Befestigungselementes verbunden werden könnte.

Ist der Überzug einteilig ausgeführt, kann hierdurch nutzbringend etwa eine einfache Fertigung des Überzuges, beispielsweise als ein Spritzgussteil, gewährleistet werden.

Zudem wirkt es sich sehr lohnend aus, wenn in einer Ausbildung der Überzug aus einem Elastomer hergestellt ist, wobei dies unter anderem den Vorteil haben könnte, dass bei einer eventuell auftretenden mechanischen Belastung des Halters dieser z. B. reversibel verbogen und somit eine Belastung eines an dem Halter angeordneten Steckers minimiert werden kann.

Ist der Halter über ein Festkörpergelenk mit dem Grundkörper des Überzuges verbunden, so kann davon ausgegangen werden, dass dadurch eine in Grenzen ausgeprägte, rotatorische Bewegung des Halters gegenüber dem Grundkörper des Überzuges ermöglicht werden kann, wodurch dieser z. B. in mehreren Drehpositionen ausgerichtet werden kann und somit Anforderungen an eine bestimmte Positionierung des Halters, beispielsweise bei einem Raummangel, erfüllt werden können.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Ausführungsform des Standes der Technik;
- Fig. 2: eine Weiterbildung des erfindungsgemäßen Überzuges;
- Fig. 3: eine Detaildarstellung einer Weiterbildung eines einteilig ausgeprägten Überzuges;
- Fig. 4: die Verbindung des Halters mit dem Grundkörper.

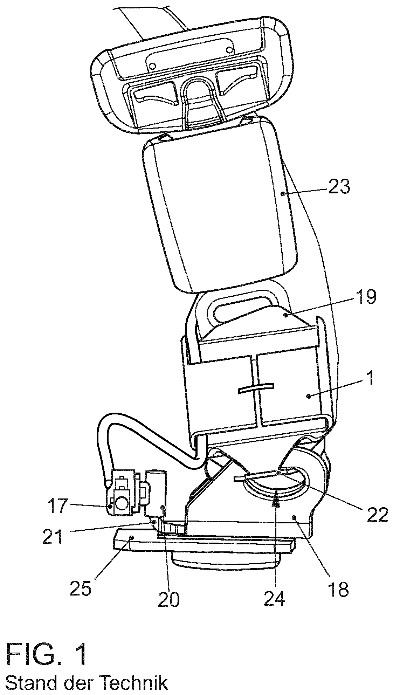

Figur 1 zeigt den Stand der Technik, bei welchem der Überzug 1 auf einem als Gurtband ausgeprägten Band 19 aufgeschoben ist. Das Band 19 dient hierbei der Befestigung eines Gurtschlosses 23 an dem Montagesockel 18, welcher wiederum zur Verbindung mit der Karosserie 25 eines Fahrzeuges vorgesehen ist. Über einen Klemmfuß 22, welcher in eine Durchbrechung 24 des Montagesockels 18 eingreift, wird der Überzug 1 in Grenzen in seiner Position auf dem Band 19 fixiert. Der Montagesockel 18 ist so ausgebildet, dass dieser eine Nase 21, welche normal zu der Karosserie 25 aufgestellt ist, aufweist, auf welcher ein Elementhalter 20 angeordnet ist. An diesem Elementhalter 20 ist dabei ein als Stecker ausgebildetes Element 17 befestigt.

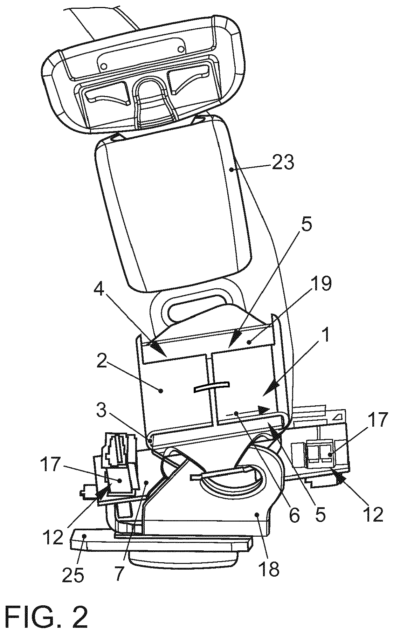

In Figur 2 hingegen ist eine Weiterbildung des erfindungsgemäßen Überzuges 1 für das Band 19 dargestellt, der insbesondere zum Schutz des Bandes 19 vor mechanischen Einflüssen vorgesehen ist. Das in diesem Fall als Gurtband ausgebildete Band 19 dient hier wiederum der Befestigung des Gurtschlosses 23 an dem Montagesockel 18, wobei dieser erneut zur Verbindung mit der Karosserie 25 eines Fahrzeuges vorgesehen ist. Der Überzug 1 weist einen Grundkörper 2 auf, welcher so ausgeprägt ist, dass dieser Grundkörper 2 eine zumindest abschnittsweise von einer Wandung 3 umgrenzte Durchbrechung 4 aufweist, wodurch der Überzug 1 so an dem Band 19 angeordnet ist, dass die Wandung 3 des Grundkörpers 2 das Band 19 in Umfangsrichtung 6 des Grundkörpers 2 zumindest abschnittsweise umschließt. Erfindungsgemäß ist hierbei an der Wandung 3 des Grundkörpers 2 ein Halter 7 angeordnet. Der Halter 7 weist in dieser Weiterbildung zwei Aufnahmen 12 auf, die der Befestigung jeweils eines als ein Stecker ausgebildeten Elementes 17 dienen.

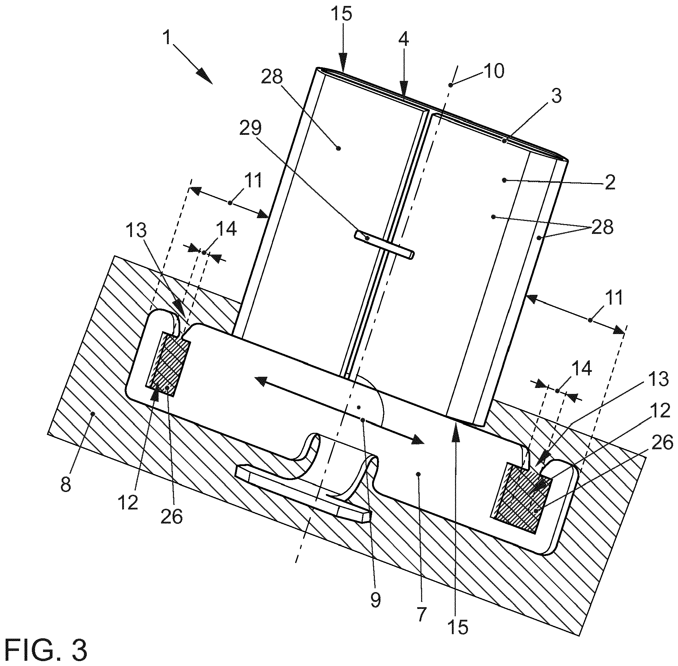

Figur 3 zeigt eine Detaildarstellung einer Weiterbildung des einteilig ausgeprägten Überzuges 1 für ein in Figur 2 dargestelltes Band 19, insbesondere zum Schutz dieses Bandes 19 vor mechanischen Einflüssen, wobei der Überzug 1 einen Grundkörper 2 aufweist, welcher so ausgeprägt ist, dass dieser Grundkörper 2 eine zumindest abschnittsweise von einer Wandung 3 umgrenzte Durchbrechung 4 aufweist. Zudem weist der an der Wandung 3 des Grundkörpers 2 angeordnete Halter 7 eine zumindest annähernd quaderförmige, plattenartig ausgeprägte Grundform auf, wobei die Dicke des Halters 7 normal zu einer Halterebene 8 ausgeprägt ist. Überdies ist dem annähernd quaderförmig und plattenartig ausgeprägten Halter 7 eine länglich gestreckte Form eigen, wodurch dieser eine Längsrichtung 9 aufweist. Der Halter 7 ist dabei so an einer der Stirnseiten 15 des Grundkörper 2 angeordnet, dass die Längsrichtung 9 des Halters 7 orthogonal zu der Mittelachse 10 des Überzuges 1 ausgerichtet ist. Der Halter 7 zeigt zudem in seiner Längsrichtung 9, beidseitig der Mittelachse 10 des Überzuges 1, gegenüber dem Grundkörper 2 einen Überstand 11 auf. Weiterhin weist der Halter 7 zwei sich im Flächeninhalt ihrer Grundflächen 26 unterscheidende Aufnahmen 12 auf, wobei jeweils eine Aufnahme 12 auf einer Seite der Mittelachse 10 des Überzuges 1 im Bereich des Überstandes 11 des Halters 7 angeordnet ist, wobei die Aufnahmen 12 den Halter 7 normal zu der Halterebene 8 durchbrechen. An einer jeweiligen Aufnahme 12 ist weiterhin eine Führung 13 angeordnet, welche den Halter 7 in eine Richtung, welche innerhalb der Halterebene 8 liegt, abschnittsweise durchbricht, wodurch die Aufnahme 12 in diese Richtung zugänglich ist und sich eine lichte Weite 14 der Führung 13 in Richtung der Aufnahme 12 verringert. Hierdurch bedingt verläuft die Führung 13 sich in diese Richtung zuspitzend.

Anzumerken ist, dass der Grundkörper 2 hierbei nicht aus einer geschlossen umlaufenden Wandung 3 besteht. Vielmehr ist dieser aus einer mehrere Seitenteile 28 ergebenden Abwicklung ausgeführt, welche über ein Befestigungselement 29 verbunden den Grundkörper 2 ergeben.

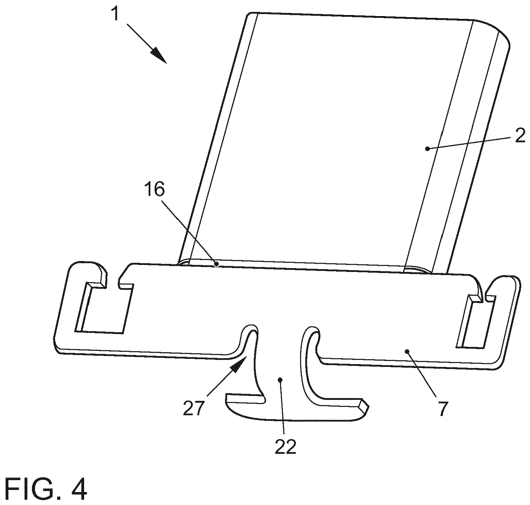

Figur 4 zeigt ergänzend die Verbindung des Halters 7 mit dem Grundkörper 2 des Überzuges 1 über ein Festkörpergelenk 16.

Der Figur 4 ist ebenso die Anordnung des Klemmfußes 22 in der Ausnehmung 27 des Halters 7 zu entnehmen, wobei dieses Merkmal mit allen Weiterbildungen der Erfindung kombinierbar ist.

**Bezugszeichenliste**

| | | | |
|---|---|---|---|
| 1 | Überzug | 21 | Nase |
| 2 | Grundkörper | 22 | Klemmfuß |
| 3 | Wandung | 23 | Gurtschloss |
| 4 | Durchbrechung | 24 | Durchbrechung |
| | | 25 | Karosserie |
| | | | |
| 6 | Umfangsrichtung | 26 | Grundfläche |
| 7 | Halter | 27 | Ausnehmung |
| 8 | Halterebene | 28 | Seitenteil |
| 9 | Längsrichtung | 29 | Befestigungselement |
| 10 | Mittelachse | | |
| | | | |
| 11 | Überstand | | |
| 12 | Aufnahme | | |
| 13 | Führung | | |
| 14 | Lichte Weite | | |
| 15 | Stirnseite | | |
| | | | |
| 16 | Festkörpergelenk | | |
| 17 | Element | | |
| 18 | Montagesockel | | |
| 19 | Band | | |
| 20 | Elementhalter | | |

## Patentansprüche

1. Überzug (1) für ein Band (19) eines Sicherheitsgurtes für ein Fahrzeug, insbesondere zum Schutz des Bandes (19) vor mechanischen Einflüssen, wobei der Überzug (1) einen Grundkörper (2) aufweist, welcher so ausgeprägt ist, dass dieser Grundkörper (2) eine zumindest abschnittsweise von einer Wandung (3) umgrenzte Durchbrechung (4) aufweist, wodurch der Überzug (1) so an dem Band (19) anordenbar ist, dass die Wandung (3) des Grundkörpers (2) das Band (19) in Umfangsrichtung (6) des Grundkörpers (2) zumindest abschnittsweise umschließt, wobei an der Wandung (3) des Grundkörpers (2) ein Halter (7) angeordnet ist und der Halter (7) zumindest eine Aufnahme (12) aufweist, **dadurch gekennzeichnet, dass** die zumindest eine Aufnahme (12) den Halter (7) normal zu der Halterebene (8) durchbricht.

2. Überzug nach Anspruch 1, **dadurch gekennzeichnet, dass** der Halter (7) eine zumindest annähernd quaderförmige, plattenartig ausgeprägte Grundform aufweist, wobei die Dicke des Halters (7) normal zu einer Halterebene (8) ausgeprägt ist.

3. Überzug nach Anspruch 2, **dadurch gekennzeichnet, dass** dem annähernd quaderförmig und plattenartig ausgeprägten Halter (7) eine länglich gestreckte Form eigen ist und dieser somit eine Längsrichtung (9) aufweist.

4. Überzug nach Anspruch 3, **dadurch gekennzeichnet, dass** der Halter (7) so an dem Grundkörper (2) des Überzuges (1) angeordnet ist, dass die Längsrichtung (9) des Halters (7) orthogonal zu einer Mittelachse (10) des Überzuges (1) ausgerichtet ist.

5. Überzug nach zumindest einem der vorangehenden Ansprüche, **dadurch gekennzeichnet, dass** der Halter (7) in seiner Längsrichtung (9), beidseitig der Mittelachse (10) des Überzuges (1), gegenüber dem Grundkörper (2) einen Überstand (11) aufweist.

6. Überzug nach zumindest einem der vorangehenden Ansprüche, **dadurch gekennzeichnet, dass** der Halter (7) zwei Aufnahmen (12) aufweist, wobei jeweils eine Aufnahme (12) auf einer Seite der Mittelachse (10) des Überzuges (1) im Bereich des Überstandes (11) des Halters (7) angeordnet ist.

7. Überzug nach Anspruch 6, **dadurch gekennzeichnet, dass** sich der Flächeninhalt der Grundflächen (26) zumindest zweier in den Halter (7) eingebrachten Aufnahmen (12) voneinander unterscheidet.

8. Überzug nach den Ansprüchen6 oder 7, **dadurch gekennzeichnet, dass** an der zumindest einen Aufnahme (12) des Halters (7) eine Führung (13) angeordnet ist, welche den Halter (7) in eine Richtung, welche innerhalb der Halterebene (8) liegt, abschnittsweise durchbricht, wodurch die Aufnahme (12) in diese Richtung zugänglich ist.

9. Überzug nach Anspruch 8, **dadurch gekennzeichnet, dass** sich eine lichte Weite (14) der Führung (13) in Richtung der Aufnahme (12) verringert, wodurch die Führung (13) sich in diese Richtung zuspitzend verläuft.

10. Überzug nach zumindest einem der vorangehenden Ansprüche, **dadurch gekennzeichnet, dass** der Halter (7) an einer Stirnseite (15) des Grundkörpers (2) angeordnet ist.

11. Überzug nach zumindest einem der vorangehenden Ansprüche, **dadurch gekennzeichnet, dass** der Überzug (1) einteilig ausgeführt ist.

12. Überzug nach zumindest einem der vorangehenden Ansprüche, **dadurch gekennzeichnet, dass** der Überzug (1) aus einem Elastomer hergestellt ist.

13. Überzug nach zumindest einem der vorangehenden Ansprüche, **dadurch gekennzeichnet, dass** der Halter (7) über ein Festkörpergelenk (16) mit dem Grundkörper (2) des Überzuges (1) verbunden ist.

## Claims

1. A cover (1) for a strap (19) of a seat belt for a motor vehicle, in particular for protecting the strap (19) from mechanical influences, wherein the cover (1) has a basic body (2) that is formed in such a way that this basic body (2) has a through opening (4) that is bounded at least in sections by a wall (3), wherein the cover (1) is so arrangeable on the strap (19) that the wall (3) of the basic body(2) encloses the strap (19) in the peripheral direction (6) of the basic body (2) at least in sections, wherein a support (7) is arranged on the wall (3) of the basic body (2) and the support (7) has at least one seat (12),**characterized in that** the at least one seat (12) normally passes through the support (7) to the support plane (8).

2. The cover according to claim 1, **characterized in that** the support (7) has at least one approximately cuboid plate-shaped formed basic form, wherein the thickness of the support (7) is normally formed to a support plane (8).

3. The cover according to claim 2, **characterized in that** the approximately cuboid and plate-shaped formed support (7) has a longitudinally extending form and the support (7) thus has a longitudinal direction (9).

4. The cover according to claim 3, **characterized in that** the support (7) is so arranged on the basic body (2) of the cover (1) that the longitudinal direction (9) of the support (7) is oriented orthogonally to a centre line (10) of the cover (1).

5. The cover according to at least one of the preceding claims, **characterized in that** the support (7) in the longitudinal direction (9) thereof has an overhang (11) on both sides of the centre line (10) of the cover (1) in relation to the basic body (2).

6. The cover according to at least one of the preceding claims, **characterized in that** the support (7) has two seats (12), wherein one seat (12) on one side of the centre line (10) of the cover (1) is arranged in the area of the overhang (11) of the support (7).

7. The cover according to claim 6, **characterized in that** the area of the base areas (26) of at least two of the seats (12) introduced into the support (7) are distinguished from one another.

8. The cover according to claims 6 or 7, **characterized in that** on the at least one seat (12) of the support (7) a guide (13) is arranged that passes through the support (7) in sections in a direction that is within the support plane (8), wherein the seat (12) is accessible in this direction.

9. The cover according to claim 8, **characterized in that** a clear extent (14) of the guide (13) narrows in the direction of the seat (12), whereby the guide (13) runs in a tapering manner in this direction.

10. The cover according to at least one of the preceding claims, **characterized in that** the support (7) is arranged on a front side (15) of the basic body (2) .

11. The cover according to at least one of the preceding claims, **characterized in that** the cover (1) is made as one piece.

12. The cover according to at least one of the preceding claims, **characterized in that** the cover (1) is manufactured from an elastomer.

13. The cover according to at least one of the preceding claims, **characterized in that** the support (7) is connected to the basic body (2) of the cover (1) via a solid-body joint (16).

## Revendications

1. Élément de recouvrement (1) pour une courroie (19) d'une ceinture de sécurité pour un véhicule, destiné en particulier à protéger ladite courroie (19) contre les influences mécaniques, l'élément de recouvrement (1) comportant un corps de base (2), qui est formé de sorte que ce corps de base (2) comporte un évidement traversant (4) bordé au moins par sections par une paroi (3), l'élément de recouvrement (1) pouvant être ainsi agencé en correspondance de la courroie (19), de sorte que la paroi (3) du corps de base (2) entoure la courroie (19) au moins par sections dans la direction circonférentielle (6) du corps de base (2), un support (7) étant agencé sur la paroi (3) du corps de base (2) et ledit support (7) comportant au moins un réceptacle (12), **caractérisé en ce que** le au moins un réceptacle (12) traverse le support (7) normalement dans le plan de support (8).

2. Élément de recouvrement selon la revendication 1, **caractérisé en ce que** le support (7) présente une au moins forme de base approximativement cuboïde et en forme de plaque, l'épaisseur du support (7) étant formée normalement dans le plan de support (8).

3. Élément de recouvrement selon la revendication 2, **caractérisé en ce qu'**une forme allongée est intrinsèque au support approximativement cuboïde et en forme de plaque (7) et celui-ci présente ainsi une direction longitudinale (9).

4. Élément de recouvrement selon la revendication 3, **caractérisé en ce que** le support (7) est agencé en correspondance du corps de base (2) de l'élément de recouvrement (1), de sorte que la direction longitudinale (9) du support (7) est orientée de manière orthogonale par rapport à un axe central (10) de l'élément de recouvrement (1).

5. Élément de recouvrement selon au moins l'une des revendications précédentes, **caractérisé en ce que** le support (7) présente une saillie (11) par rapport au corps de base (2) dans sa direction longitudinale (9), sur les deux côtés de l'axe central (10) de l'élément de recouvrement (1).

6. Élément de recouvrement selon au moins l'une des revendications précédentes, **caractérisé en ce que** le support (7) comporte deux réceptacles (12), chaque réceptacle (12) étant agencé sur un côté de l'axe central (10) de l'élément de recouvrement (1) dans la zone de la saillie (11) du support (7).

7. Élément de recouvrement selon la revendication 6, **caractérisé en ce que** l'aire des surfaces de base (26) diffère au moins de deux réceptacles (12) montés dans le support (7).

8. Élément de recouvrement selon la revendication 6 ou 7, **caractérisé en ce qu'**un guide (13) est agencé en correspondance d'au moins un réceptacle (12) du support (7), ledit guide traverse par sections le support (7) dans une direction, qui se trouve à l'intérieur du plan de support (8), le réceptacle (12) étant ainsi accessible dans cette direction.

9. Élément de recouvrement selon la revendication 8, **caractérisé en ce qu'**une largeur libre (14) du guide (13) se réduit dans la direction du réceptacle (12), le guide (13) s'étendant ainsi dans cette direction de manière conique.

10. Élément de recouvrement selon au moins l'une des revendications précédentes, **caractérisé en ce que** le support (7) est agencé sur un côté frontal (15) du corps de base (2).

11. Élément de recouvrement selon au moins l'une des revendications précédentes, **caractérisé en ce que** l'élément de recouvrement (1) est réalisé en une pièce.

12. Élément de recouvrement selon au moins l'une des revendications précédentes, **caractérisé en ce que** l'élément de recouvrement (1) est fabriqué à partir d'un élastomère.

13. Élément de recouvrement selon au moins l'une des revendications précédentes, **caractérisé en ce que** le support (7) est relié au corps de base (2) de l'élément de recouvrement (1) par une articulation à corps solide (16).
